(19) Europäisches Patentamt
European Patent Office
Office européen des brevets

(11) **EP 4 535 291 A1**

(12) **EUROPEAN PATENT APPLICATION**
published in accordance with Art. 153(4) EPC

(43) Date of publication:
**09.04.2025 Bulletin 2025/15**

(21) Application number: **23909795.9**

(22) Date of filing: **22.11.2023**

(51) International Patent Classification (IPC):
**G06T 19/00** (2011.01)     **G06F 3/01** (2006.01)

(52) Cooperative Patent Classification (CPC):
**G06F 3/01; G06T 19/00**

(86) International application number:
**PCT/CN2023/133208**

(87) International publication number:
**WO 2024/139863 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.12.2022 CN 202211678806**

(71) Applicant: **Beijing Zitiao Network Technology Co.,
Ltd.
Beijing 100190 (CN)**

(72) Inventors:
• **SHU, Xiangqian
Beijing 100028 (CN)**
• **GUO, Hengkai
Beijing 100028 (CN)**
• **WEN, Jiawei
Beijing 100028 (CN)**

(74) Representative: **Williams, Michael David
Marks & Clerk LLP
1 New York Street
Manchester M1 4HD (GB)**

(54) **CALIBRATION INFORMATION DETERMINATION METHODS AND APPARATUS, ELECTRONIC DEVICE, AND STORAGE MEDIUM**

(57)     The present disclosure provides a calibration information determining method and apparatus, an electronic device, and a storage medium. The method includes: during a process of a movement along a plurality of dimensional directions of a target device, obtaining a plurality of pairs of sampling information of the target device corresponding to the plurality of dimensional directions, wherein different pairs of sampling information correspond to different poses of the target device, and each pair of sampling information includes: two-dimensional detection data of the target device and three-dimensional detection data of the target device, wherein the two-dimensional detection data is obtained by an image acquisition device, and the three-dimensional detection data is obtained by a virtual reality device; and determining calibration information of the image acquisition device in a coordinate system of a virtual reality world based on the plurality of pairs of sampling information corresponding to the plurality of dimensional directions

During a process of a movement along a plurality of dimensional directions of a target device, obtaining a plurality of pairs of sampling information of the target device corresponding to the plurality of dimensional directions, wherein different pairs of sampling information correspond to different poses of the target device, and each pair of sampling information includes: two-dimensional detection data of the target device and three-dimensional detection data of the target device. Wherein, the two-dimensional detection data is obtained by an image acquisition device, and the three-dimensional detection data is obtained by a VR device — 201

Determining calibration information of the image acquisition device in a coordinate system of a virtual reality world based on the plurality of pairs of sampling information corresponding to a plurality of dimensional directions — 202

FIG. 2

## Description

### CROSS REFERENCE TO RELATED APPLICATIONS

The present application is based on and claims priority from CN Patent Application No. 202211678806.7 filed on December 26, 2022, the disclosure of which is incorporated by reference herein in its entirety.

### TECHNICAL FIELD

The present disclosure relates to the field of mixed reality technologies, and in particular, to a calibration information determining method and apparatus, an electronic device, and a storage medium.

### BACKGROUND

In a Virtual Reality (VR) game scene, a real target picture can be captured by means of an image acquisition device, and the real target picture captured by the image acquisition device is mixed into a game picture of the VR device in combination with a matting capability, so that a Mixed Reality Capture (MRC) function is realized.

### SUMMARY

According to an aspect of the present disclosure, a calibration information determining method is provided, and the method includes:
during a process of a movement along a plurality of dimensional directions of a target device, obtaining a plurality of pairs of sampling information of the target device corresponding to the plurality of dimensional directions, different pairs of sampling information correspond to different poses of the target device, and each pair of sampling information includes: two-dimensional detection data of the target device and three-dimensional detection data of the target device, the two-dimensional detection data is obtained by an image acquisition device, and the three-dimensional detection data is obtained by a virtual reality device; and
determining calibration information of the image acquisition device in a coordinate system of a virtual reality world based on the plurality of pairs of sampling information corresponding to the plurality of dimensional directions.

According to another aspect of the present disclosure, a calibration information determining method is provided, and the method includes:

responding to a calibration starting operation, presenting operation prompt information, and the operation prompt information is used for guiding a target device to move along a plurality of dimensional directions;
during a process of controlling the target device to move along the plurality of dimensional directions, sending a plurality of three-dimensional detection data of the target device corresponding to the plurality of dimensional directions; and
responding to a sampling termination message, obtaining a calibration information of an image acquisition device in a coordinate system of a virtual reality world.

According to another aspect of the present disclosure, a calibration information determining apparatus is provided, and includes:

an acquisition module configured to, during a process of a movement along a plurality of dimensional directions of a target device, obtain a plurality of pairs of sampling information of the target device corresponding to the plurality of dimensional directions, different pairs of sampling information correspond to different poses of the target device, and each pair of sampling information includes: two-dimensional detection data of the target device and three-dimensional detection data of the target device, the two-dimensional detection data is obtained by an image acquisition device, and the three-dimensional detection data is obtained by a virtual reality device; and
a determining module configured to, determine calibration information of the image acquisition device in a coordinate system of a virtual reality world based on the plurality of pairs of sampling information corresponding to the plurality of dimensional directions.

According to another aspect of the present disclosure, a calibration information determining apparatus is provided, and includes:

a presentation module configured to, responding to a calibration starting operation, present operation prompt information, and the operation prompt information is used for guiding a target device to move along a plurality of dimensional directions;
a sending template configured to during a process of controlling the target device to move along the plurality of dimensional directions, send a plurality of three-dimensional detection data of the target device corresponding to the plurality of dimensional directions; and
an acquisition module configured to, responding to a sampling termination message, obtain a calibration information of an image acquisition device in a coordinate system of a virtual reality world.

According to another aspect of the present disclosure, an electronic device is provided, and includes:

a processor; and,
a memory storing a program;
the program includes instructions which, when executed by the processor, cause the processor to carry out the method according to the method of the exemplary embodiment of the present disclosure.

According to another aspect of the present disclosure, a non-transitory computer readable storage medium is provided, and the non-transitory computer readable storage medium stores computer instructions that, when executed by a processor of a computer, cause the processor to perform the method according to the method of the exemplary embodiment of the present disclosure.

## BRIEF DESCRIPTION OF THE DRAWINGS

Further details, features and advantages of the present disclosure are disclosed in the following description of exemplary embodiments, taken in conjunction with the accompanying drawings, in which:

Fig. 1 illustrates a schematic view of an implementation scenario of a calibration information determining method according to an exemplary embodiment of the present disclosure;
Fig. 2 illustrates a flowchart of the calibration information determining method in an exemplary embodiment of the present disclosure;
Fig. 3 illustrates a schematic flow chart of a sample information eliminating flow in an exemplary embodiment of the present disclosure;
Fig. 4 illustrates a flow chart of realignment of a plurality of pairs of sample information in an exemplary embodiment of the present disclosure;
Fig. 5 illustrates a flow chart of another calibration information determining method of an exemplary embodiment of the present disclosure;
Fig. 6 illustrates a schematic block diagram of functional modules of a calibration information determining apparatus according to an exemplary embodiment of the present disclosure;
Fig. 7 illustrates another schematic block diagram of functional module of the calibration information determining apparatus according to the exemplary embodiment of the present disclosure;
Fig. 8 illustrates a schematic block diagram of a chip according to an exemplary embodiment of the present disclosure; and
Fig. 9 illustrates a block diagram of an exemplary electronic device that can be used to implement embodiments of the present disclosure.

## DETAILED DESCRIPTION

Embodiments of the present disclosure will be described in more detail below with reference to the accompanying drawings. While certain embodiments of the present disclosure are shown in the drawings, it should be understood that the present disclosure may be embodied in various forms and should not be construed as limited to the embodiments set forth herein, but rather are provided for a more complete and thorough understanding of the present disclosure. It should be understood that the drawings and the embodiments of the present disclosure are for illustration purposes only and are not intended to limit the scope of the present disclosure.

It should be understood that the various steps recited in method embodiments of the present disclosure may be performed in different orders, and/or performed in parallel. Moreover, method embodiments may include additional steps and/or omit performing the illustrated steps. The scope of the present disclosure is not limited in this respect.

The term "including" and variations thereof as used herein is intended to be open-ended, i.e., "including but not limited to". The term "based on" is "based at least in part on". The term "one embodiment" means "at least one embodiment"; the term "another embodiment" means "at least one additional embodiment"; the term "some embodiments" means "at least some embodiments". Relevant definitions for other terms will be given in the following description. It should be noted that the terms "first", "second", and the like in the present disclosure are only used for distinguishing different apparatuses, modules or units, and are not used for limiting the order or interdependence of the functions performed by these apparatuses, modules or units.

It is noted that references to "a" or "an" in this disclosure are intended to be illustrative rather than limiting, and that those skilled in the art will appreciate that references to "one or more" are intended to be exemplary and not limiting unless the context clearly indicates otherwise.

The names of messages or information exchanged between a plurality apparatuses in the embodiments of the present disclosure are for illustrative purposes only, and are not intended to limit the scope of the messages or information.

Before describing the embodiments of the present disclosure, the following explanations will be made for the related terms related to the embodiments of the present disclosure.

The Perspective-n-Point problem (PnP) is a method for solving the movement of a three-dimensional point to a two-dimensional point pair. It describes how we estimate the pose of the camera when n three-dimensional spatial points and their projection positions are known.

Random Sample Consensus algorithm (RANSAC) is an algorithm for obtaining valid sample data by calculating mathematical model parameters of the data according to a sample data set containing abnormal data. When the matched point pair is tested by using a mathematical model, if the error of the matched point pair is within a set error threshold value, the matched point pair is called an inlier matched point pair, and otherwise, the matched point pair is called an outlier matched point pair.

In the related art, in order to obtain a Mixed Reality Capture (MRC) image, it is necessary to operate a Virtual Reality (VR) device, a mobile phone with an image acquisition function, and a handle associated with the VR device. In the operation process, the mobile phone is fixed by a tripod, the capturing angle of the mobile phone is adjusted, then the image of the handle in the real world is captured by the mobile phone, and the virtual image of the handle preset in the related calibration program is coincided with the handle position in the image of the handle captured by the mobile phone by operating the mobile phone. On the basis, calibration information of the image acquisition device in a coordinate system of the VR world, namely a conversion matrix from a coordinate system of the camera of the mobile phone to the coordinate system of the VR world, can be calculated through an algorithm preset in a related calibration program, so that calibration is completed.

However, the calibration process requires the user to repeatedly switch between the VR device and the mobile phone, and the calibration steps are very complicated. Moreover, the mobile phone still needs to be fixed during the whole calibration process, and the calibration is very difficult to be completed by a single person under the condition that fixing apparatus such as a tripod are not available. Moreover, the mobile phone is easy to move during the calibration process, and the calibration error is easy to increase. In addition, when the virtual image of the handle and the captured image of the handle are aligned by operating the mobile phone, the virtual image of the handle preset on the mobile phone screen is substantially dragged to the handle position in the captured image of the handle, and the virtual image of the handle can only be dragged in two dimensions in the above method. Therefore, only information of the handle in two dimensions can be obtained, so that only the pitch angle and the yaw angle can be calibrated in the calibration process, the roll angle cannot be calibrated, and the calibration accuracy is further limited.

In order to overcome the above problems, exemplary embodiments of the present disclosure provide a calibration information determining method, which can complete calibration of an image acquisition device in a virtual reality world by a single person without fixing the image acquisition device, simplify calibration steps, and improve calibration accuracy.

The method of the exemplary embodiments of the present disclosure may be performed by an electronic device, which may be a smart phone (e.g., an Android phone, an iOS phone), a wearable device, an AR (augmented reality) / VR device, an ultra-mobile personal computer (UMPC), a netbook, a Personal Digital Assistant (PDA), a tablet computer, a palmtop computer, a Mobile Internet Device (MID), and the like, using a flash memory storage device.

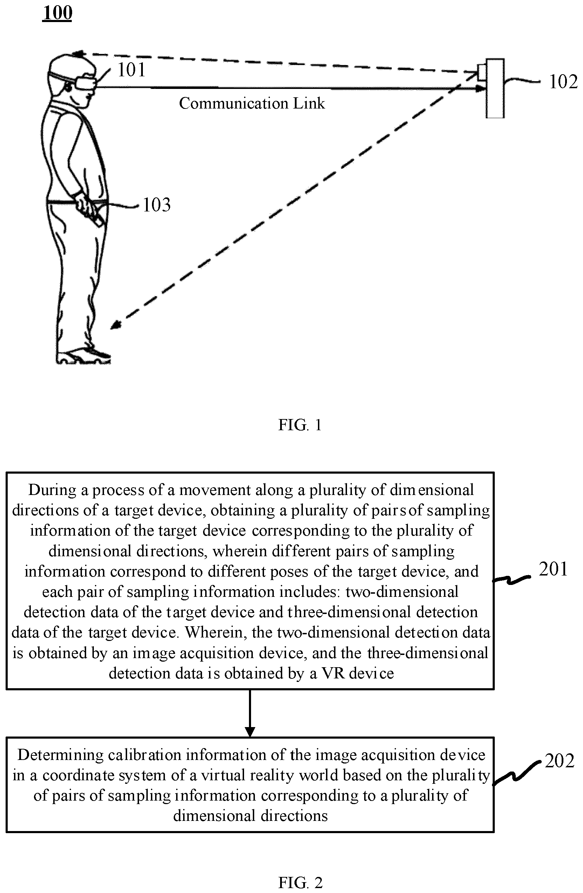

Fig. 1 illustrates an implementation scenario diagram of a calibration information determining method according to an exemplary embodiment of the present disclosure. As shown in Fig. 1, the implementation scenario 100 includes a VR device 101 and an image acquisition apparatus 102. The image acquisition apparatus 102 may be located at any position in any posture, and it does not need to be fixed by a fixing apparatus as long as the captured image data includes the target device. The VR device 101 may display various virtual reality images, and may further obtain pose data of the target device and corresponding acquisition time (i.e., a timestamp for obtaining the pose data of the target device), and the image acquisition apparatus 102 may obtain an image of the target device. It should be understood that the implementation scenario shown in Fig. 1 is only an exemplary illustration, and that other relative positions of the VR device and the image acquisition apparatus may be provided in an actual scenario.

As shown in Fig. 1, the VR device 101 may establish a communication link with the image acquisition apparatus 102. For example, the VR device 101 and the image acquisition apparatus 102 may be connected to the same network. The VR device 101 may be a head-mounted virtual reality device, such as virtual reality glasses, and the target device 103 may be a device that can be worn or held by any part of the user, for example: handles, wristband, masks, shoes, ankle band, etc. The image acquisition apparatus 102 may be a camera or a mobile phone, a tablet computer, a smart watch and the like with an image acquisition function. For example, the user may wear VR glasses and hold the target device to capture an image containing the target device through a camera on a cell phone.

Fig. 2 illustrates a flowchart of a calibration information determining method according to an exemplary embodiment of the present disclosure. As shown in Fig. 2, a method of an embodiment of the present disclosure may include:

Step 201: during a process of a movement along a plurality of dimensional directions of a target device, obtaining a plurality of pairs of sampling information of the target device corresponding to the plurality of dimensional directions, different pairs of sampling information correspond to different poses of the target device, and each pair of sampling information includes: two-dimensional detection data of the target device and three-dimensional detection data of the target device. Wherein, the two-dimensional detection data is obtained by an image acquisition device, and the three-dimensional detection data is obtained by a VR device.

In the embodiment of the present disclosure, during the process that the target device moves along a plurality of dimensional directions, data acquisition may be performed by the VR device and the image acquisition device, respectively, to obtain corresponding pairs of sampling information when the target device is in a plurality of different poses. In other words, when the target device is in each pose, the virtual device and the image acquisition device respectively obtain data with respect to the target device, so as to obtain sampling information when the target device is in the corresponding pose.

In some examples, the three-dimensional detection data may be pose data of the target device, and a sampling time parameter of the three-dimensional detection data is a detection time when the virtual reality device detects the three-dimensional detection data. Specifically, in the process that the target device moves along a plurality of dimensional directions, the VR device may obtain pose data of the target device at a plurality of different times, and record a timestamp corresponding to each time as a sampling time parameter of the three-dimensional detection data, where the timestamp is defined as a first timestamp. The VR device can send the pose data of the target device at different times and the corresponding first timestamps to the calibration apparatus.

For example, the VR device may send the pose data of the target device to the calibration apparatus while obtaining the pose data of the target device, may also obtain a certain number of pose data of the target devices, and then send the obtained pose data of the target device to the calibration apparatus, or may send the three-dimensional detection data to the calibration apparatus by using other possible sending methods.

The sampling time parameter of the two-dimensional detection data of the exemplary embodiment of the present disclosure is an image acquisition time corresponding to the time when image acquisition device obtains the two-dimensional detection data. Specifically, during the process that the target device moves along a plurality of dimensional directions, the image acquisition device may obtain a plurality of frames of two-dimensional images including the target device, and record a timestamp when each frame of the two-dimensional image is obtained as a sampling timestamp of the two-dimensional detection data. The timestamp is defined as a second timestamp, and each frame of the two-dimensional image and the corresponding second timestamp is sent to the calibration apparatus. The calibration apparatus can receive the three-dimensional detection data sent by the VR device, and can also receive each frame of the two-dimensional image and corresponding second timestamp sent by the image acquisition device, and extract the two-dimensional detection data of the target device from the two-dimensional image.

In some examples, the image acquisition device has a function of processing image data, and the image acquisition device may extract two-dimensional detection data of the target device from the two-dimensional image of the target device, and then send the two-dimensional detection data and the corresponding second timestamp to the calibration apparatus. Based on this, when the two-dimensional image is a video image, the two-dimensional image includes a plurality of frames of two-dimensional images, and the time when each frame of two-dimensional image is obtained is the second timestamp corresponding to such frame of two-dimensional image.

For example, the image acquisition device may send the two-dimensional detection data to the electronic device while obtaining the two-dimensional detection data of the target device. The image acquisition device may also send the obtained two-dimensional detection data of the target devices to the calibration apparatus after obtaining a certain number of the two-dimensional detection data of target devices.

In practical applications, if the calibration apparatus according to the exemplary embodiment of the present disclosure is independent of the VR device and the image detection device, communication links between the calibration apparatus, the VR device, and the image acquisition device may be established, so as to achieve the purpose of data interaction. The manner of establishing the communication links may be networking. For image acquisition device with computing capabilities, such as for mobile phones with image acquisition functions, the calibration apparatus may be deployed or integrated in the image acquisition device. Thus, only the image acquisition device and the virtual reality device may be networked to establish the data connection. The virtual reality device can respond to the operation of a user and send a calibration request to the image acquisition device, and the image acquisition device can respond to the received calibration request and start the image acquisition function.

When the calibration apparatus is deployed or integrated in the image acquisition device the exemplary embodiment of the present disclosure, the virtual reality device can transmit the three-dimensional detection data to the image acquisition device in real time. The three-dimensional detection data may include coordinates of the three-dimensional key points of the target device in the coordinate system of the VR world, a pose of the target device in the coordinate system of the VR world, and a first timestamp. The image acquisition device can capture a two-dimensional image of the target device in real time, and obtain the two-dimensional detection data by using a key point detection algorithm through an identification module of the image acquisition device, the two-dimensional detection data can include coordinates of the two-dimensional key points of the target device in the two-dimensional image.

For example, for the same pair of sampling information, the coordinates of the three-dimensional key points of the target device in the coordinate system of the VR world and the coordinates of the two-dimensional key points of the target device in the two-dimensional image may have the correspondence between the number of key points and between the positions of the key points. For example, for the same pair of sampling information, a certain key point of the target device has corresponding coordinate of the two-dimensional key point in a two-dimensional image, and has corresponding coordinate of the three-dimensional key point in a coordinate system of the VR world.

In order to preliminarily align the two-dimensional detection data and the three-dimensional detection data in the same pair of sampling information in the time dimension, the three-dimensional key data obtained by a first timestamp close to a second timestamp corresponding to the first frame of two-dimensional image may be selected as first three-dimensional key data. At this time, it may be ensured that the first frame of two-dimensional detection data and the first three-dimensional key point data correspond to the same pose of the target device as much as possible. For example, during the process of obtaining the first frame of two-dimensional image or after the acquisition of the first frame of two-dimensional image is finished, three-dimensional key point data is received and can be used as first three-dimensional key point data. At this time, when the first frame of the two-dimensional image and the first three-dimensional key point data are defined as a pair of sampling information, the two-dimensional detection data and the three-dimensional detection data may correspond to the same pose of the target device.

Step 202: determining calibration information of the image acquisition device in a coordinate system of a virtual reality world based on the plurality of pairs of sampling information corresponding to a plurality of dimensional directions.

It should be noted that the pose of the target device obtained by the VR device may be the pose of the target device in the coordinate system of the VR world, and in a case where the conversion matrix of the other coordinate system and the coordinate system of the VR world is known, the pose of the target device may refer to the pose of the target device in the other coordinate system.

The two-dimensional detection data may include not only the coordinates of the two-dimensional key points of the target device in the two-dimensional image, but also the pose of the image acquisition device, and the pose of the image acquisition device may be the pose data of the image acquisition device in a Simultaneous Localization and Mapping (SLAM) world coordinate system. If the image acquisition device is fixed by the fixing apparatus, the poses of the image acquisition device corresponding to each pair of sampling information are the same. However, during the process of moving the target device along a plurality of dimensional directions, if the image acquisition device is also in a moving state, the pose of the image acquisition device will also change with the change of sampling information. If the image acquisition device is in an intermittent moving state, the pose of the image acquisition device is likely to change along with the change of the sampling information and is also likely to remain unchanged. On the basis, each pair of sampling information can be input into the calibration module of the image acquisition device, and the calibration information of the image acquisition device in the coordinate system of the VR world can be determined by utilizing the spatial projection relation.

Therefore, according to the exemplary embodiment of the present disclosure, the calibration information of the image acquisition device in the coordinate system of the VR world can be automatically determined without frequent operating the VR device and the image acquisition device by a user, so that calibration steps are simplified.

Moreover, the method of the exemplary embodiment of the present disclosure may implement the above calibration process without fixing the image acquisition device, and determine the calibration information of the image acquisition device in the coordinate system of the VR world. In addition, the method of the exemplary embodiment of the present disclosure controls the target device to move along a plurality of dimensional directions and obtains a plurality of pairs of sampling information of the target device corresponding to the plurality of dimensional directions during the process that the target device moves along the plurality of dimensional directions, so that calibration information of the image acquisition device in the plurality of dimensional directions in the coordinate system of the virtual reality world can be determined, and the calibration accuracy is effectively improved.

In consideration of the possible differences of the system setting between the image acquisition device and the virtual reality device, in some possible embodiments, in order to further align the sampling information in the time dimension so that the two-dimensional detection data and the three-dimensional detection data of the target device included in each pair of sampling information may correspond to the same pose of the target device, in the embodiments of the present disclosure, at least one of the following two methods may be specifically included:

the first method: the sampling information determines a first time correction parameter based on a sampling time parameter of the two-dimensional detection data and a sampling time parameter of the three-dimensional detection data of the target device corresponding to the same pose, and aligns the sampling time parameter of a plurality of the two-dimensional detection data and the sampling time parameter of a plurality of the three-dimensional detection data based on the first time correction parameter. The sampling time parameter may be a timestamp.

For example, in some application scenarios, the image acquisition device and the virtual reality device may employ different timestamp formats. For example, for a virtual reality device, the start time in the timestamp format employed by the virtual reality device is not consistent with the start time in the timestamp format employed by the image acquisition device. Therefore, when the target device is in any pose, the timestamp difference of the first timestamp corresponding to the three-dimensional detection data of the target device and the second timestamp corresponding to the two-dimensional detection data of the target device can be determined as the first time correction parameter. The first timestamps corresponding to the obtained plurality of three-dimensional detection data are corrected based on the timestamp difference, or the second timestamps corresponding to the obtained a plurality of two-dimensional detection data are corrected based on the timestamp difference.

For example, in some embodiments, a first timestamp T1 corresponding to the first three-dimensional detection data and a second timestamp T2 corresponding to the first two-dimensional image may be obtained at the time of starting calibration, and a timestamp difference between the first timestamp and the second timestamp $T_{delta}$ = T1-T2 may be calculated. Specifically, the second timestamp corresponding to each two-dimensional detection data may be corrected based on $T_{delta}$ to achieve the purpose of timestamp alignment, or the first timestamp corresponding to each three-dimensional detection data may be corrected based on $T_{delta}$ to achieve the purpose of timestamp alignment.

The second method: the three-dimensional detection data which is aligned with the sampling time of the two-dimensional detection data is determined based on at least two three-dimensional detection data in a plurality of three-dimensional detection data of the target device corresponding to the plurality of dimensional directions.

For example, in some application scenarios, because there is a difference in system settings between the image acquisition device and the virtual reality device, for example, the system clocks are not synchronous, and therefore, in the actual data collecting process, when the virtual reality device obtains three-dimensional detection data of the target device at a certain time, the image acquisition device may not capture a two-dimensional image including the target device, that is, the obtained first timestamps of the plurality of three-dimensional detection data and the second timestamps of the plurality of two-dimensional detection data cannot be aligned one by one in the time dimension. Based on this, in some possible embodiments, a method of data fitting or data interpolation may be used to determine the three-dimensional detection data aligned with the two-dimensional detection data in the time dimension, so as to obtain a plurality of pairs of sampling information of the target device corresponding to a plurality of dimensional directions.

For example, in some embodiments, if it is determined that the second timestamp corresponding to a certain two-dimensional detection data of the target device is T2, there is no three-dimensional detection data in the obtained plurality of three-dimensional detection data that is time-aligned with the second timestamp T2 of the two-dimensional detection data. At this time, two first timestamps T1A and T1B adjacent to the second timestamp T2 in the time dimension may be determined from the first timestamps of the obtained plurality of three-dimensional detection data. The second timestamp T2 represents a time between the times represented by the two first timestamps T1A and T1B, and three-dimensional detection data which is time-aligned with the second timestamp T2 can be obtained by interpolating the two three-dimensional detection data corresponding to the two first timestamps T1A and T1B.

In some possible embodiments, in order to ensure that the two-dimensional detection data and the three-dimensional detection data of the target device included in each pair of sampling information correspond to the same pose of the target device as much as possible, the first method and the second method described above may be used in combination. For example, the sampling time parameters of the plurality of two-dimensional detection data and the sampling time parameters of the plurality of three-dimensional detection data that are obtained in a plurality of dimensional directions may be aligned by using the first time correction parameter, and then the three-dimensional detection data aligned with the obtained two-dimensional detection data in the time dimension may be determined by data interpolation or data fitting process, so as to obtain a plurality of pairs of sampling information of the target device corresponding to a plurality of dimensional directions.

In the data collection process, whether to terminate the data collection can be determined according to the obtained data amount, the distribution uniformity degree of the obtained data in the plurality of dimensional directions, whether the movement of the target device in the plurality of dimensional directions meets preset conditions and the like. Based on this, before determining the calibration information of the image acquisition device in the coordinate system of the VR world, the method of the exemplary embodiment of the present disclosure may further include: determining that a plurality of pairs of sampling information of the target device in the plurality of the dimensional directions meet a sampling termination condition. The sampling termination condition includes at least one of the following.

The first condition is that: the number of the obtained pairs of sampling information is larger than the preset number. That is to say, when the number of pairs of obtained sampling information of the target device in each dimensional direction reaches a preset number, the calibration accuracy of the image acquisition device in each dimensional direction can be ensured.

The second condition is that: the distribution of the obtained plurality of pairs of sampling information in different dimensional directions meets the preset distribution uniformity, so that the calibration result of the image acquisition device in each dimensional direction is not influenced by data distribution. That is, when the target device moves in a plurality of dimensional directions, the obtained sampling information in each dimensional direction corresponds to a plurality of movement positions of the target device in such dimensional direction, and the movement positions of the target device corresponding to the obtained pairs of sampling information should be distributed as uniformly as possible in the plurality of dimensional directions. In a possible embodiments, during the process that the target device moves along a plurality of dimensional directions, a plurality of theoretical sampling positions on the movement path of the target device may be determined based on a theoretical sampling interval, and corresponding detection data may be saved to form a plurality of pairs of sampling information, where a distance between two adjacent theoretical sampling positions is the theoretical sampling interval, and the theoretical sampling interval may be set empirically.

For example, the collected two-dimensional detection data and three-dimensional detection data may be aligned in a time dimension to form a plurality of pairs of candidate sampling information, where each pair of candidate sampling information corresponds to one position of the target device during the moving process. A plurality of pairs of sampling information can be determined from the plurality of pairs of candidate sampling information according to a preset theoretical sampling interval from the position corresponding to the first pair of candidate sampling information.

It should be noted that when the sampling information corresponding to each theoretical sampling position is determined from a plurality of pairs of candidate sampling information, it is difficult to ensure that the corresponding candidate sampling information is collected at all the theoretical sampling positions. Therefore, the actual sampling distance between two adjacent theoretical sampling positions can be set as a controllable distance interval, the minimum value of the controllable distance interval is the theoretical sampling distance, and the maximum value of the controllable distance interval is the allowed maximum sampling distance, and the controllable distance interval can be designed according to actual conditions. For example, assuming that the theoretical distance between two adjacent sampling positions is 10cm, the controllable distance interval between the two adjacent sampling positions can be set to be 10 cm-20 cm, and two-dimensional detection data can be detected at the two adjacent sampling positions.

The third condition is that: the target device completes the movement along a plurality of dimensional directions along a preset movement path. That is to say, during the process that the target device moves along a plurality of dimensional directions, it may be determined whether the target device completes movement along the plurality of dimensional directions along the preset movement path, so as to further ensure that sampling information of the target device in the plurality of dimensional directions may be obtained, and calibration accuracy of the image acquisition device in each dimensional direction is ensured.

For example, the preset movement path of the target device may include a circular movement path and a linear movement path, and a movement direction of the linear movement path intersects a plane defined by the circular movement path. Here, the circular movement path may be regarded as movement of the target device in a two-dimensional plane formed by a first dimensional direction and a second dimensional direction, and the linear movement path may be regarded as movement of the target device in a direction intersecting the two-dimensional plane.

For example, according to the embodiments of the present disclosure, when calibration is started, the VR device may display an operation prompt message for prompting controlling the target device to move according to a preset movement path, and send a plurality of three-dimensional detection information of the target device corresponding to a plurality of dimensional directions to the calibration apparatus. When the calibration apparatus determines that the sampling termination condition is reached, a sampling termination message may be fed back to the VR device. At this time, the VR device may obtain calibration information of the image acquisition device in the coordinate system of the VR world based on the sampling termination message, and may further prompt to stop the target device from moving according to the preset movement path.

In one possible embodiment, the VR device may prompt the user to control the target device to move according to a movement path that circles first and then moves back and forth, and may take the starting circle as a movement start point and the completion of the back and forth movement as a movement end point. When the movement start point and the movement end point are detected, respectively, the target device may be considered to have completed movement in a plurality of dimensional directions along the preset movement path.

In order to further ensure the accuracy of the calibration result and improve the calibration accuracy, the calibration result can be comprehensively estimated based on the three conditions. For example, when it is detected that the target device completes movement in a plurality of dimensional directions along a preset movement path, it is determined whether the number of the obtained pairs of sampling information is greater than a preset number, and it is determined that the distribution of the obtained pairs of sampling information in a plurality of dimensional directions meets a preset distribution uniformity. When the obtained a plurality of pairs of sampling information concurrently satisfy the above three preset conditions, the sampling can be considered to be finished.

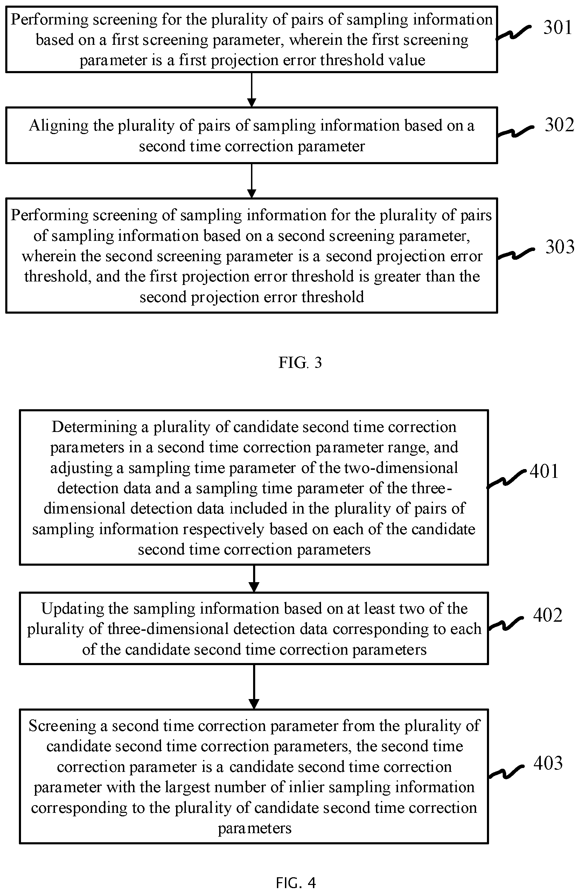

During the process of obtaining a plurality of pairs of sampling information of the target device corresponding to a plurality of dimensional directions, due to the fact that certain detection errors exist when corresponding detection data are obtained, accurate alignment matching of the obtained two-dimensional detection data and the obtained three-dimensional detection data is difficult to conduct. Based on the method, the sampling information with higher detection error can be eliminated to improve the accuracy of the sampling information. This process may be implemented, for example, using the random sample consensus (RANSAC) algorithm. Fig. 3 illustrates a schematic flow chart of a sample information screening flow in an exemplary embodiment of the present disclosure. As shown in Fig. 3, after obtaining a plurality of pairs of sampling information of the target device corresponding to a plurality of dimensional directions, the method according to the exemplary embodiment of the present disclosure may further include:

Step 301: performing screening for the plurality of pairs of sampling information based on a first screening parameter, the first screening parameter is a first projection error threshold value. For example, a method of combining the RANSAC method with the PnP solution may be used to screen out the sampling information corresponding to two-dimensional detection data with a high detection error. The first screening parameter may then be the first projection error. For example, when regarding the coordinates of the two-dimensional key points and the coordinates of the three-dimensional key points included in each pair of obtained sampling information as a matched point pair, a plurality of pairs of sampling information may be selected from the obtained large amount of sampling information, and the corresponding matched point pair may be set as an inlier matched point pair. The first projection model is fitted based on each of the inlier matched point pairs, and the pose of the target device, the pose of the image acquisition device and the internal parameters of the image acquisition device corresponding to each of the inlier matched point pairs.

In practical application, the coordinates of the three-dimensional key points in other matched point pairs, the corresponding pose of the target device, the pose of the image acquisition device and the internal parameters of the image acquisition device can be substituted into the fitted first projection model, so that the first projection model outputs the predicted coordinates of the two-dimensional key points. A first projection error is then determined based on the coordinates of the two-dimensional key points in the other matched pair of points and the predicted coordinates of the two-dimensional key points. If the first projection error is smaller than a preset first projection error threshold value, the matched point pair is considered as an inlier matched point pair. Otherwise, the matched point pair belongs to an outlier matched point pair. Meanwhile, the percentage of the inlier matched point pairs among all the matched point pairs can be calculated, and if the percentage is greater than or equal to a preset percentage, the first projection model is considered to meet the optimized projection model. Otherwise, the first projection model is updated based on all the inlier matched point pairs. Finally, taking the plurality of pairs of sampling information corresponding to the outlier matched point pairs which do not meet the optimized projection model as the eliminated sampling information.

After a plurality of pairs of sampling information are screened through step 301, step 302 may be executed to further improve the time correspondence of the sampling information.

Step 302: aligning the plurality of pairs of sampling information based on a second time correction parameter. The process is essentially to adjust a first timestamp and a second timestamp corresponding to three-dimensional detection data and two-dimensional detection data in each pair of sampling information by using a second time correction parameter, and then timestamp alignment can be performed on the three-dimensional detection data and the two-dimensional detection data by referring to a second method when obtaining a plurality of pairs of sampling information of a target device corresponding to a plurality of dimensional directions. In other words, the sampling time parameter of the three-dimensional detection data or the sampling time parameter of the two-dimensional detection data in each pair of sampling information may be adjusted using the second time correction parameter.

Fig. 4 illustrates a flow chart of alignment of a plurality of pairs of sample information in an exemplary embodiment of the present disclosure. As shown in Fig. 4, aligning the plurality of pairs of sampling information based on a second time correction parameter according to an exemplary embodiment of the present disclosure may include:

Step 401: determining a plurality of candidate second time correction parameters in a second time correction parameter range, and adjusting a sampling time parameter of the two-dimensional detection data and a sampling time parameter of the three-dimensional detection data included in the plurality of pairs of sampling information respectively based on each of the candidate second time correction parameters. For example, a plurality of candidate second time correction parameters may be determined by enumeration according to a preset value interval within a second time correction parameter range, and then a sampling time parameter of two-dimensional detection data and a sampling time parameter of three-dimensional detection data in a plurality of pairs of sampling information may be adjusted according to each candidate second time correction parameter. The implementation process herein may refer to the related description of the first manner when obtaining a plurality of pairs of sampling information of the target device corresponding to a plurality of dimensional directions. The second time correction parameter range may be an empirical value, or may be a range value determined by other means such as data statistics.

For example, a candidate second time correction parameter may be determined every 50ms interval within a range of -700 ms to +700ms of the second time correction parameters. The candidate second time correction parameter may refer to a difference between a first timestamp corresponding to three-dimensional detection data and a second timestamp corresponding to two-dimensional detection data included in the same pair of sampling information. Therefore, the second timestamp corresponding to the two-dimensional detection data included in each sampling information may be corrected based on the candidate second time correction parameter, or the first timestamp corresponding to the three-dimensional detection data included in each sampling information may be corrected based on the candidate second time correction parameter.

Step 402: updating the sampling information based on at least two of the plurality of three-dimensional detection data corresponding to each of the candidate second time correction parameters. The step of updating the sampling information is to redetermine the time alignment relationship between the two-dimensional detection data and the three-dimensional detection data by using a fitting or interpolation algorithm.

It should be noted that the plurality of three-dimensional detection data corresponding to each candidate second time correction parameter refers to a plurality of three-dimensional detection data obtained by adjusting the sampling time parameter included in a plurality of pairs of sampling information based on each candidate second time correction parameter. For example, assuming that in the three-dimensional detection data obtained after the adjustment in step 401, there is no three-dimensional detection data time-aligned with a second timestamp of a certain two-dimensional detection data, two first timestamps adjacent to the second timestamp in the time dimension may be determined from the first timestamps of the three-dimensional detection data, and the time represented by the second timestamp is between the times represented by the two first timestamps. On the basis, interpolation is carried out by utilizing the two three-dimensional detection data of the two second timestamps, and the three-dimensional detection data time-aligned with the second timestamps is obtained.

Step 403: screening a second time correction parameter from the plurality of candidate second time correction parameters, and the second time correction parameter is a candidate second time correction parameter with the largest number of inlier sampling information corresponding to the plurality of candidate second time correction parameters.

For example, the number of inlier matched point pairs (i.e., sampling information) corresponding to a plurality of pairs of sampling information corresponding to each candidate second time correction parameter may be determined in a RANSAC method, and the candidate second time correction parameter with the largest number of inlier matched point pairs may be used as the second time correction parameter. At the time, the two-dimensional detection data and the corresponding three-dimensional detection data included in the plurality of pairs of sampling information are realigned by the second time correction parameter, so that the position alignment accuracy of the plurality of pairs of sampling information can be obviously improved, the sampling information accuracy and the data quantity required by subsequent determination of the calibration information are increased, the possibility of insufficient data quantity and data flaws is avoided, and the calibration accuracy is further ensured.

After step 302 is completed, step 303 may be performed: performing screening of sampling information for the plurality of pairs of sampling information based on a second screening parameter, the second screening parameter is a second projection error threshold, and the first projection error threshold is greater than the second projection error threshold. For example, a method of combining the RANSAC method with the PnP solution may be used to screen sampling information corresponding to two-dimensional detection data with a high detection error.

For example, regarding the coordinate of the two-dimensional key points and the coordinate of the three-dimensional key points included in each pair of obtained sampling information as a matched point pair, a plurality of pairs of sampling information may be selected from the obtained large amount of sampling information, and the corresponding matched point pair may be set as an inlier matched point pair. A second projection model is fitted based on each inlier matched point pair, and the pose of the target device, the pose of the image acquisition device and the internal parameters of the image acquisition device corresponding to each inlier matched point pair.

In practical application, the coordinates of the three-dimensional key points in other matched point pairs, the corresponding pose of the target device, the pose of the image acquisition device and the internal parameters of the image acquisition device can be substituted into the fitted first projection model, so that the second projection model outputs the predicted coordinates of the two-dimensional key points. A second projection error is then determined based on the coordinates of the two-dimensional key points in the other matched pair and the predicted coordinates of the two-dimensional key points. If the second projection error is smaller than a preset second projection error threshold value, the matched point pair is considered as an inlier matched point pair. Otherwise, the matched point pair belongs to an outlier matched point pair. Meanwhile, the percentage of the inlier matched point pairs in all the matched point pairs can be calculated, and if the percentage is greater than or equal to a preset percentage, the second projection model is considered to meet the optimized projection model. Otherwise, the second projection model is updated based on all the inlier matched point pairs. Finally, a plurality of pairs of sampling information corresponding to the outlier matched point pairs which do not meet the optimized projection model are taken as the eliminated sampling information.

For example, the exemplary embodiments of the present disclosure may set the first projection error threshold to be greater than the second projection error threshold. At this time, the method of the exemplary embodiment of the present disclosure may screen the sampling information in order of the degree of the projection error from large to small. In this case, the sampling information with obvious errors is screened and detected first, and then the sampling information with unobvious errors is screened and detected, so that the problem that the sampling information is under-eliminated or excessively eliminated due to improper projection error threshold selection when the sampling information is screened once is avoided.

Meanwhile, after the plurality of pairs of sampling information are screened based on the first screening parameter and before the plurality of pairs of sampling information are screened based on the second screening parameter, the plurality of pairs of sampling information are aligned through the second time correction parameter, and the alignment degree of the plurality of pairs of sampling information is higher at the time. Therefore, the first projection error threshold may be set larger than the second projection error threshold to avoid eliminating of the sample information with accurate position alignment.

When the modes of screening the sampling information are RANSAC modes, the screening capacity can be measured through the projection error, that is, by setting the first projection error to be larger than the second projection error, it can ensure that the sampling information with obvious detection errors is eliminated first, and then the sampling information with unobvious detection errors is eliminated.

For example, the first projection error threshold is 60 to 80, such as 60, 70, 75, or 80, and the second projection error threshold is 8 to 15. Before the sample information is first screened by the RANSAC method, a detection error of the sample information is large, and for example, another object or a part may be erroneously recognized as a target device. Therefore, when the sample information is screened out by the RANSAC method, a larger first projection error threshold value is set, and the sample information with larger detection errors can be screened out. After the sample information is screened by adopting the RANSAC method for the first time, the detection error of the remaining sample information is small, for example, the coordinate accuracy of the key point in the sample information of the target device may not be high. On the basis, when the RANSAC mode is adopted to screen the sampling information for the second time, a smaller second projection error is set, for example, 8-15, so that the sampling information with low key point detection precision can be screened more finely. After the sample information is screened by the RANSAC method for the second time, the alignment error of the residual sample information is very small. At this time, the calibration information of the image acquisition device in the coordinate system of the VR world can be determined by adopting a PnP algorithm based on the remaining pairs of sampling information. For example, determining the calibration information of the image acquisition device in the coordinate system of the VR world according to the exemplary embodiments of the present disclosure may include:

the pose of the target device in the coordinate system of the camera can be determined based on the plurality of pairs of sampling information and the internal reference of the image acquisition device, and then the pose of the target device in the coordinate system of the SLAM world can be determined based on the pose of the target device in the coordinate system of the camera and the conversion matrix $T_c^{slam\_w}$ from the coordinate system of the camera to the coordinate system of the SLAM world. On this basis, a conversion matrix $T_{slam\_w}^{vr\_w}$ from the coordinate system of the SLAM world to the coordinate system of the VR world is determined based on the pose of the target device in the coordinate system of the SLAM world and the pose of the target device in the coordinate system of the VR world. Finally, the calibration information of the image acquisition device in the coordinate system of the VR world, namely the conversion matrix $T_{vr\_w}^c$ from the coordinate system of the camera to the coordinate system of the VR world, can be determined based on the conversion matrix from the coordinate system of the SLAM world to the coordinate system of the VR world and the pose of the image acquisition device in the SLAM coordinate system. $T_{slam\_w}^{vr\_w}$、$T_c^{slam\_w}$ and $T_{vr\_w}^c$ satisfy $T_{slam\_w}^{vr\_w} = \left(T_c^{slam\_w} * T_{vr\_w}^c\right)^{-1}$, if the position and the pose of the camera are fixed, $T_c^{slam\_w}$ is kept constant, and if the position and the pose of the camera are changed, $T_c^{slam\_w}$ changes along with the change of the position and the pose of the camera.

When the PnP algorithm is adopted to determine the calibration information of the image acquisition device in the virtual reality world, the number of the pairs of the sampling information used in the PnP algorithm can be determined according to the number of the unknown parameters contained in the calibration information. Based on this, after the calibration information of the image acquisition device in the virtual reality world is determined, each pair of sampling information can be combined with the calibration information of the image acquisition device in the coordinate system of the virtual reality world to determine the calibration error. The calibration error average value corresponding to different sampling information is calculated to be less than or equal to the preset error, and then considering that the calibration is successful and returning the calibration result.

For example, the two-dimensional detection data included in each pair of sampling information may be converted into predicted three-dimensional detection data through the calibration information, and a difference between the predicted three-dimensional detection data and the actual three-dimensional detection data may be determined, where the difference may be defined as a calibration error. Then, the calibration errors corresponding to different sampling information are collected and analyzed to determine a calibration error average value, and when the calibration error average value is determined to be smaller than or equal to the preset error, a calibration result is returned. If the average value of the calibration errors is larger than the preset error, the calibration result is abnormal, and the two-dimensional detection data and the three-dimensional detection data are continuously obtained to carry out the second calibration.

Aiming at the condition that the software operating system of the equipment where the image acquisition device is located is an iOS software operating system, the pose and the internal parameters of the image acquisition device under the coordinate system of the SLAM world can be obtained according to the ARKit image of the real scene which is obtained by the equipment where the image acquisition device is located. Aiming at the condition that the operating system is an Android software operating system, the pose of the image acquisition device and the internal reference of the image acquisition device in the coordinate system of the SLAM world are calculated according to the image of the real scene captured by the image acquisition device by combining an SLAM software algorithm.

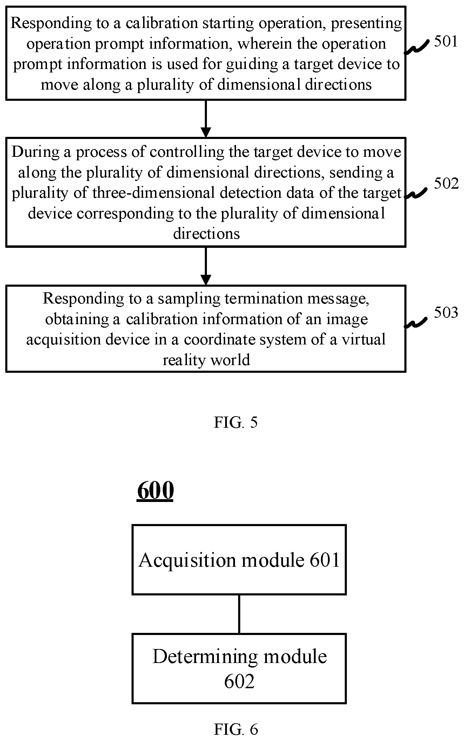

Fig. 5 illustrates a flow chart of another calibration information determining method of an exemplary embodiment of the present disclosure. As shown in Fig. 5, a calibration information determining method according to an exemplary embodiment of the present disclosure may include:

Step 501: responding to a calibration starting operation, presenting operation prompt information, and the operation prompt information is used for guiding a target device to move along a plurality of dimensional directions. The operation prompt information can be presented through VR device, and the presentation mode can be picture presentation or voice presentation. The picture presentation may be presented in the form of a video image, or may be presented in the form of a text description, which is not limited herein. For example: when the operation prompt information is presented, the user can complete a preset action under the corresponding track of the operation prompt information so as to realize that the target device moves along a plurality of dimensional directions.

The plurality of dimensional directions at least include three dimensional directions perpendicular to each other in space, and in this case, the preset action may include controlling the target device to move for one circle along the circular movement path. In some embodiments, to further ensure the calibration progress, the preset action may include controlling the target device to move along the circular movement path for one circle, and controlling the target device to move back and forth along the linear movement path, and the movement direction of the linear movement path intersects the plane defined by the circular movement path.

Step 502: during a process of controlling the target device to move along the plurality of dimensional directions, sending a plurality of three-dimensional detection data of the target device corresponding to the plurality of dimensional directions. Here, the VR device may send a plurality of three-dimensional detection data of the target device corresponding to a plurality of dimensional directions to the calibration apparatus, so that the calibration apparatus may implement calibration.

Step 503: responding to a sampling termination message, obtaining a calibration information of an image acquisition device in a coordinate system of a virtual reality world.

When the calibration apparatus determines that a plurality of pairs of sampling information of the target device in a plurality of dimensional directions meet the sampling termination condition, a sampling termination message can be sent to the VR device. At this time, the VR device stops sampling, and may obtain the calibration result, that is, the calibration information of the image acquisition device in the coordinate system of the virtual reality world, from the calibration apparatus.

In one or more technical solutions provided in the embodiments of the present disclosure, because different pairs of sampling information correspond to different poses of the target device, two-dimensional detection data of the target device and three-dimensional detection data of the target device included in each pair of sampling information substantially correspond to the same pose of the target device. That is to say, the image acquisition device and the virtual reality device can obtain the two-dimensional detection data and the three-dimensional detection data in different poses in a time-divisional manner. On the basis, based on the spatial projection relation, the calibration information of the image acquisition device in the coordinate system of the virtual reality world can be determined based on a plurality of pairs of sampling information corresponding to a plurality of dimensional directions. Therefore, according to the exemplary embodiment of the present disclosure, calibration information of the image acquisition device in the coordinate system of the virtual reality world can be automatically determined without operating the VR device and the image acquisition device back and forth, so that the calibration steps are simplified.

Moreover, the image acquisition device according to the exemplary embodiment of the present disclosure can obtain the calibration information of the image acquisition device in the coordinate system of the virtual reality world at any pose through the spatial projection relationship, and therefore, the method according to the exemplary embodiment of the present disclosure can complete the calibration of the image acquisition device in the coordinate system of the virtual reality world without fixing the image acquisition device.

In addition, during the process that the target device moves along a plurality of dimensional directions, the method of the exemplary embodiment of the present disclosure obtains a plurality of pairs of sampling information of the target device corresponding to each dimensional direction, and therefore, the exemplary embodiment of the present disclosure can determine calibration information of the image acquisition device in a plurality of dimensional directions in the coordinate system of the virtual reality world, so that the calibration accuracy is improved.

The foregoing mainly introduces aspects of the embodiments of the present disclosure from the perspective of electronic devices. It is understood that the electronic device includes corresponding hardware structures and/or software modules for performing the respective functions in order to realize the functions. Those of skilled in the art will readily appreciate that the present disclosure is capable of being implemented in hardware or a combination of hardware and computer software for performing the various illustrative elements and algorithm steps described in connection with the embodiments disclosed herein. Whether a function is performed in hardware or computer software drives hardware depends upon the particular application and design constraints imposed on the solution. Skilled artisans may implement the described functionality in varying ways for each particular application, but such implementation should not be interpreted as departing from the scope of the present disclosure.

The embodiment of the present disclosure may perform division of the functional units according to the method example, for example, each functional module may be divided corresponding to respective function, or two or more functions may be integrated into one processing module. The integrated module can be realized in a hardware mode, and can also be realized in a software functional module mode. It should be noted that, the division of the modules in the embodiment of the present disclosure is illustrative, and is only logical function division, and there may be another division manner in actual implementation.

In the case of dividing each functional module by corresponding each function, the exemplary embodiments of the present disclosure provide a calibration information determining apparatus, which may be an electronic device or a chip applied to an electronic device.

Fig. 6 illustrates a schematic block diagram of functional modules of a calibration information determining apparatus according to an exemplary embodiment of the present disclosure. As shown in Fig. 6, the calibration information determining apparatus 600 includes:

an acquisition module 601 configured to, during a process of a movement along a plurality of dimensional directions of a target device, obtain a plurality of pairs of sampling information of the target device corresponding to the plurality of dimensional directions, different pairs of sampling information correspond to different poses of the target device, and each pair of sampling information includes: two-dimensional detection data of the target device and three-dimensional detection data of the target device, the two-dimensional detection data is obtained by an image acquisition device, and the three-dimensional detection data is obtained by a virtual reality device; and

a determining module 602 configured to, determine calibration information of the image acquisition device in a coordinate system of a virtual reality world based on the plurality of pairs of sampling information corresponding to the plurality of dimensional directions.

In a possible embodiment, the acquisition module 601 is configured to determine a first time correction parameter based on a sampling time parameter of the two-dimensional detection data and a sampling time parameter of the three-dimensional detection data of the target device corresponding to the same pose; and

In a possible embodiment, the acquisition module 601 is configured to align the sampling time parameter of a plurality of the two-dimensional detection data and the sampling time parameter of a plurality of the three-dimensional detection data based on the first time correction parameter.

In a possible embodiment, the sampling time parameter of the two-dimensional detection data is an image acquisition time when the image acquisition device obtains the two-dimensional detection data, and the sampling time parameter of the three-dimensional detection data is a detection time when the virtual reality device detects the three-dimensional detection data.

In a possible embodiment, the determining module 602 is further configured to determine that a plurality of pairs of sampling information of the target device in the plurality of the dimensional directions meet a sampling termination condition, and the sampling termination condition includes at least one of the following conditions:

a number of the plurality of pairs of sampling information is larger than a preset number;
a distribution of the plurality of pairs of sampling information in different dimensional directions meets a preset distribution uniformity; and
the target device completes the movement along the plurality of the dimensional directions.

In a possible embodiment, a movement path along which the target device moves along the plurality of dimensional directions includes a circular movement path and a linear movement path, a movement direction of the linear movement path intersecting a plane defined by the circular movement path.

In a possible embodiment, the determining module 602 is configured to perform screening of sampling information for the plurality of pairs of sampling information based on a first screening parameter, the first screening parameter is a first projection error threshold; align the plurality of pairs of sampling information based on a second time correction parameter; and perform screening of sampling information for the plurality of pairs of sampling information based on a second screening parameter, the second screening parameter is a second projection error threshold, and the first projection error threshold is greater than the second projection error threshold.

In a possible embodiment, a manner of screening the sampling information is a random sample consensus algorithm.

In a possible embodiment, the determining module 602 is configured to determine a plurality of candidate second time correction parameters in a second time correction parameter range, and adjust a sampling time parameter of the two-dimensional detection data and a sampling time parameter of the three-dimensional detection data included in the plurality of pairs of sampling information respectively based on each of the candidate second time correction parameters; update the sampling information based on at least two of the plurality of three-dimensional detection data corresponding to each of the candidate second time correction parameters; and screen a second time correction parameter from the plurality of candidate second time correction parameters, and the second time correction parameter is a candidate second time correction parameter with the largest number of inlier sampling information corresponding to the plurality of candidate second time correction parameters.

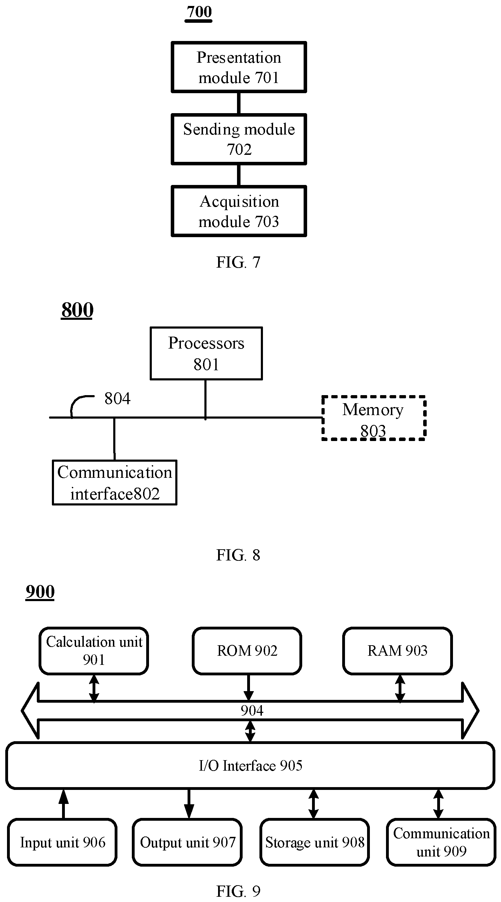

Fig. 7 illustrates another schematic block diagram of functional module of the calibration information determining apparatus according to the exemplary embodiment of the present disclosure. As shown in Fig. 7, the calibration information determining apparatus includes:

a presentation module 701 configured to, responding to a calibration starting operation, present operation prompt information, and the operation prompt information is used for guiding a target device to move along a plurality of dimensional directions; and
a sending module 702 configured to, during a process of controlling the target device to move along the plurality of dimensional directions, send a plurality of three-dimensional detection data of the target device corresponding to the plurality of dimensional directions; and
an acquisition module 703 configured to, responding to a sampling termination message, obtain a calibration information of an image acquisition device in a coordinate system of a virtual reality world.

Fig. 8 illustrates a schematic block diagram of a chip according to an exemplary embodiment of the present disclosure. As shown in Fig. 8, the chip 800 includes one or more processors 801 and a communication interface 802. The communication interface 802 can support the electronic device to perform the data transceiving step in the above method, and the processor 801 can support the electronic device to perform the data processing step in the above method.

Optionally, as shown in Fig. 8, the chip 800 further includes a memory 803, which may include a read-only memory and a random access memory, and provides operating instructions and data to the processor. A part of the memory may also include a non-volatile random access memory (NVRAM).

In some embodiments, as shown in Fig. 8, the processor 801 executes the corresponding operation by calling the operation instruction stored in the memory (which can be stored in the operating system). The processor 801 controls the processing operation of any one of the terminal devices, and the processor can also be called a central processing unit (CPU). The memory 803 may include read-only memory and random access memory, and provides instructions and data to the processor 801. A portion of the memory 803 may also include NVRAM. For example, in-application memory, communication interface and memory are coupled together through a bus system, and the bus system can include a power bus, a control bus and a status signal bus in addition to a data bus. But for the sake of clarity, various buses are labeled as bus system 804 in Fig. 8.

The method disclosed in the embodiment of the present disclosure can be applied to or realized by a processor. The processor may be an integrated circuit chip with signal processing capability. In the process of implementation, the steps of the above method can be completed by hardware integrated logic circuits or software instructions in the processor. The processor can be a general processor, a digital signal processing (DSP), an ASIC, a field-programmable gate array (FPGA) or other programmable logic devices, discrete gate or transistor logic devices, and discrete hardware components. The method, steps and logic block diagram disclosed in the embodiments of the present disclosure may be implemented or executed. The general processor can be a microprocessor or the processor can be any conventional processor, etc. The steps of the method disclosed in combination with the embodiment of the present disclosure can be directly embodied as the completion of execution by a hardware decoding processor, or the completion of execution by a combination of hardware and software modules in the decoding processor. Software modules can be located in random access memory, flash memory, read-only memory, programmable read-only memory or electrically erasable programmable memory, registers and other mature storage media in this field. The storage medium is located in the memory, and the processor reads the information in the memory and combines its hardware to complete the steps of the above method.

An exemplary embodiment of the present disclosure also provides an electronic device, including at least one processor; and a memory communicatively connected with the at least one processor. The memory stores a computer program that can be executed by the at least one processor, and the computer program, when executed by the at least one processor, is used for causing the electronic device to perform the method according to the embodiment of the present disclosure.

Exemplary embodiments of the present disclosure also provide a non-transitory computer-readable storage medium storing a computer program, and the non-transitory computer-readable storage medium stores computer instructions that, when executed by a processor of a computer, cause the processor to perform the method according to the embodiment of the present disclosure.

Exemplary embodiments of the present disclosure also provide a computer program product including instructions, and the instructions, when executed by a processor of a computer, are used to cause the processor to perform the method according to the embodiment of the present disclosure.

Exemplary embodiments of the present disclosure also provide a computer program including instructions for causing a processor of a computer to perform a method according to an embodiment of the present disclosure.

Referring to Fig. 9, a structural block diagram of an electronic device 900 that can be a server or a client of the present disclosure will now be described, which is an example of a hardware device that can be applied to various aspects of the present disclosure. Electronic devices are intended to represent various forms of digital electronic computer devices, such as laptop computers, desktop computers, workstations, personal digital assistants, servers, blade servers, mainframe computers, and other suitable computers. Electronic devices can also represent various forms of mobile devices, such as personal digital processing, cellular phones, smart phones, wearable devices and other similar computing devices. The components shown herein, their connections and relationships, and their functions are only examples, and are not intended to limit the implementation of the present disclosure described and/or claimed herein.

As shown in Fig. 9, an electronic device 900 includes a calculation unit 901, which can perform various appropriate actions and processes according to a computer program stored in a read-only memory (ROM) 902 or a computer program loaded from a storage unit 908 into a random access memory (RAM) 903. In the RAM 903, various programs and data required for the operation of the device 900 can also be stored. A computing unit 901, a ROM 902 and a RAM 903 are connected to each other through a bus 904. An input/output (I/O) interface 905 is also connected to the bus 904.

A plurality of components in the electronic device 900 are connected to the I/O interface 905, including an input unit 906, an output unit 907, a storage unit 908 and a communication unit 909. The input unit 906 may be any type of device capable of inputting information to the electronic device 900, and the input unit 906 may receive input numeric or character information and generate key signal input related to user settings and/or function control of the electronic device. The output unit 907 may be any type of device capable of presenting information, and may include but not limited to a display, a speaker, a video/audio output terminal, a vibrator and/or a printer. The storage unit 908 may include, but is not limited to, a magnetic disk and an optical disk. The communication unit 909 allows the electronic device 900 to exchange information/data with other devices through a computer network such as the Internet and/or various telecommunication networks, and may include but not limited to a modem, a network card, an infrared communication device, a wireless communication transceiver and/or a chipset, such as a Bluetooth™ device, a WiFi device, a WiMax device, a cellular communication device and/or the like.

The computing unit 901 may be various general and/or special processing components with processing and computing capabilities. Some examples of the computing unit 901 include, but are not limited to, a central processing unit (CPU), a graphics processing unit (GPU), various specialized artificial intelligence (AI) computing chips, various computing units running machine learning model algorithms, a digital signal processor (DSP), and any suitable processor, controller, microcontroller, etc. The computing unit 901 performs the various methods and processes described above. For example, in some embodiments, the method of the exemplary embodiment of the present disclosure may be implemented as a computer software program tangibly embodied in a machine-readable medium, such as the storage unit 908. In some embodiments, part or all of the computer program may be loaded and/or installed on the electronic device 900 via the ROM 902 and/or the communication unit 909. In some embodiments, the computing unit 901 may be configured to perform the methods of the exemplary embodiments of the present disclosure by any other suitable means (for example, by means of firmware).

The program code for implementing the method of the present disclosure can be written in any combination of one or more programming languages. These program codes may be provided to a processor or controller of a general-purpose computer, a special-purpose computer or other programmable data processing apparatus, so that the program codes, when executed by the processor or controller, cause the functions/operations specified in the flowcharts and/or block diagrams to be implemented. The program code can be completely executed on a machine, partially executed on a machine, partially executed on a machine as a separate software package and partially executed on a remote machine or completely executed on a remote machine or server.

In the context of this disclosure, a machine-readable medium may be a tangible medium that may contain or store a program for use by or in connection with an instruction execution system, apparatus or device. The machine-readable medium may be a machine-readable signal medium or a machine-readable storage medium. A machine-readable medium may include, but is not limited to, an electronic, magnetic, optical, electromagnetic, infrared, or semiconductor system, device or equipment, or any suitable combination of the above. More specific examples of the machine-readable storage medium may include an electrical connection based on one or more lines, a portable computer disk, a hard disk, a random access memory (RAM), a read-only memory (ROM), an erasable programmable read-only memory (EPROM or flash memory), an optical fiber, a convenient compact disk read-only memory (CD-ROM), an optical storage device, a magnetic storage device, or any suitable combination of the above.

As used in this disclosure, the terms "machine-readable medium" and "computer-readable medium" refer to any computer program product, device, and/or device (e.g., magnetic disk, optical disk, memory, programmable logic device (PLD)) for providing machine instructions and/or data to a programmable processor, including machine-readable media that receive machine instructions as machine-readable signals. The term "machine-readable signal" refers to any signal used to provide machine instructions and/or data to a programmable processor.

In order to provide interaction with users, the systems and techniques described herein can be implemented on a computer having a display device (for example, a CRT (cathode ray tube) or an LCD (liquid crystal display) monitor) for displaying information to users; And a keyboard and a pointing device (for example, a mouse or a trackball) through which a user can provide input to the computer. Other kinds of devices can also be used to provide interaction with users; For example, the feedback provided to the user can be any form of sensory feedback (for example, visual feedback, auditory feedback, or tactile feedback); And the input from the user can be received in any form, including acoustic input, voice input or tactile input.

The systems and techniques described herein may be implemented in or include a computing system that includes a back-end component (e.g., as a data server), a computing system that includes a middleware component (e.g., an application server), or a computing system that includes a front-end component (e.g., a user computer with a graphical user interface or a web browser through which a user can interact with embodiments of the systems and techniques described herein). Components of the system can be interconnected by any form or medium of digital data communication (for example, communication network). Examples of communication networks include local area network (LAN), wide area network (WAN) and Internet.

A computer system may include a client and a server. The client and server are generally far away from each other and usually interact through a communication network. The relationship between client and server is generated by computer programs running on corresponding computers and having a client-server relationship with each other.

In the above embodiments, it can be realized in whole or in part by software, hardware, firmware or any combination thereof. When implemented in software, it can be fully or partially implemented in the form of a computer program product. The computer program product includes one or more computer programs or instructions. When the computer program or instruction is loaded and executed on a computer, the process or function described in the embodiment of the present disclosure is fully or partially executed. The computer can be a general-purpose computer, a special-purpose computer, a computer network, a terminal, user equipment or other programmable devices. The computer program or instructions can be stored in a computer-readable storage medium or transmitted from one computer-readable storage medium to another. For example, the computer program or instructions can be transmitted from one website, computer, server or data center to another website, computer, server or data center by wired or wireless means. The computer-readable storage medium can be any available medium that a computer can access or a data storage device such as a server or a data center that integrates one or more available media. The available media can be magnetic media, such as floppy disk, hard disk, magnetic tape. It can also be an optical medium, such as a digital video disc (DVD). It can also be a semiconductor medium, for example, a solid state drive (SSD).

Although the present disclosure has been described in connection with specific features and embodiments thereof, it is obvious that various modifications and combinations can be made without departing from the spirit and scope of the present disclosure. Accordingly, the specification and drawings are merely illustrative of the present disclosure as defined by the appended claims, and are regarded as covering any and all modifications, variations, combinations or equivalents within the scope of the present disclosure. Obviously, those skilled in the art can make various modifications and variations to the present disclosure without departing from its spirit and scope. Thus, if these modifications and variations of the present disclosure are within the scope of the claims of the present disclosure and their equivalents, the present disclosure is also intended to include them.

**Claims**

1. A calibration information determining method comprises:

during a process of a movement along a plurality of dimensional directions of a target device, obtaining a plurality of pairs of sampling information of the target device corresponding to the plurality of dimensional directions, wherein different pairs of sampling information correspond to different poses of the target device, and each pair of sampling information comprises: two-dimensional detection data of the target device and three-dimensional detection data of the target device, wherein the two-dimensional detection data is obtained by an image acquisition device, and the three-dimensional detection data is obtained by a virtual reality device; and determining calibration information of the image acquisition device in a coordinate system of a virtual reality world based on the plurality of pairs of sampling information corresponding to the plurality of dimensional directions.

2. The method of claim 1, wherein the obtaining a plurality of pairs of sampling information of the target device corresponding to the plurality of dimensional directions comprises:

determining a first time correction parameter based on a sampling time parameter of the two-dimensional detection data and a sampling time parameter of the three-dimensional detection data of the target device corresponding to the same pose; and aligning the sampling time parameter of a plurality of the two-dimensional detection data and the sampling time parameter of a plurality of the three-dimensional detection data based on the first time correction parameter.

3. The method of claim 1, wherein the obtaining a plurality of pairs of sampling information of the target device corresponding to the plurality of dimensional directions comprises: determining the three-dimensional detection data which is aligned with the sampling time of the two-dimensional detection data based on at least two three-dimensional detection data in a plurality of three-dimensional detection data of the target device corresponding to the plurality of dimensional directions.

4. The method of claim 1, wherein the sampling time parameter of the two-dimensional detection data is an image acquisition time when the image acquisition device obtains the two-dimensional detection data, and the sampling time parameter of the three-dimensional detection data is a detection time when the virtual reality device detects the three-dimensional detection data.

5. The method of claim 1, wherein the method further comprises: determining that a plurality of pairs of sampling information of the target device in the plurality of the dimensional directions meet a sampling termination condition, wherein the sampling termination condition comprises at least one of the following conditions:

a number of the plurality of pairs of sampling information is larger than a preset number; a distribution of the plurality of pairs of sampling information in different dimensional directions meets a preset distribution uniformity; and the target device completes the movement along the plurality of the dimensional directions.

6. The method of claim 1, wherein a movement path along which the target device moves along the plurality of dimensional directions comprises a circular movement path and a linear movement path, a movement direction of the linear movement path intersecting a plane defined by the circular movement path.

7. The method of any one of claims 1 to 6, wherein the method further comprises:

performing screening of sampling information for the plurality of pairs of sampling information based on a first screening parameter, wherein the first screening parameter is a first projection error threshold; aligning the plurality of pairs of sampling information based on a second time correction parameter; and performing screening of sampling information for the plurality of pairs of sampling information based on a second screening parameter, wherein the second screening parameter is a second projection error threshold, and the first projection error threshold is greater than the second projection error threshold.

8. The method of claim 7, wherein a manner of screening the sampling information is a random sample consensus algorithm.

9. The method of claim 7, wherein the aligning the plurality of pairs of sampling information based on a second time correction parameter comprises:

determining a plurality of candidate second time correction parameters in a second time correction parameter range, and adjusting a sampling time parameter of the two-dimensional detection data and a sampling time parameter of the three-dimensional detection data comprised in the plurality of pairs of sampling information respectively based on each of the candidate second time correction parameters;

updating the sampling information based on at least two of the plurality of three-dimensional detection data corresponding to each of the candidate second time correction parameters; and

screening a second time correction parameter from the plurality of candidate second time correction parameters, wherein the second time correction parameter is a candidate second time correction parameter with the largest number of inlier sampling information corresponding to the plurality of candidate second time correction parameters.

10. A calibration information determining method comprises:

responding to a calibration starting operation, presenting operation prompt information, wherein the operation prompt information is used for guiding a target device to move along a plurality of dimensional directions;

during a process of controlling the target device to move along the plurality of dimensional directions, sending a plurality of three-dimensional detection data of the target device corresponding to the plurality of dimensional directions; and

responding to a sampling termination message, obtaining a calibration information of an image acquisition device in a coordinate system of a virtual reality world.

11. A calibration information determining apparatus comprising:

an acquisition module configured to, during a process of a movement along a plurality of dimensional directions of a target device, obtain a plurality of pairs of sampling information of the target device corresponding to the plurality of dimensional directions, wherein different pairs of sampling information correspond to different poses of the target device, and each pair of sampling information comprises: two-dimensional detection data of the target device and three-dimensional detection data of the target device, wherein the two-dimensional detection data is obtained by an image acquisition device, and the three-dimensional detection data is obtained by a virtual reality device; and

a determining module configured to, determine calibration information of an image acquisition device in a coordinate system of a virtual reality world based on the plurality of pairs of sampling information corresponding to the plurality of dimensional directions.

12. A calibration information determining apparatus comprising:

a presentation module configured to, responding to a calibration starting operation, present operation prompt information, wherein the operation prompt information is used for guiding a target device to move along a plurality of dimensional directions;

a sending template configured to during a process of controlling the target device to move along the plurality of dimensional directions, send a plurality of three-dimensional detection data of the target device corresponding to the plurality of dimensional directions; and

an acquisition module configured to, responding to a sampling termination message, obtain a calibration information of an image acquisition device in a coordinate system of a virtual reality world.

13. An electronic device, comprising:

a processor; and,
a memory storing a program;
wherein the program comprises instructions which, when executed by the processor, cause the processor to carry out the method according to any one of claims 1 to 10.

14. A non-transitory computer readable storage medium, wherein the non-transitory computer readable storage medium stores computer instructions that, when executed by a processor of a computer, cause the processor to perform the method of any of claims 1-10.

<u>100</u>

FIG. 1

During a process of a movement along a plurality of dimensional directions of a target device, obtaining a plurality of pairs of sampling information of the target device corresponding to the plurality of dimensional directions, wherein different pairs of sampling information correspond to different poses of the target device, and each pair of sampling information includes: two-dimensional detection data of the target device and three-dimensional detection data of the target device. Wherein, the two-dimensional detection data is obtained by an image acquisition device, and the three-dimensional detection data is obtained by a VR device ⟩— 201

Determining calibration information of the image acquisition device in a coordinate system of a virtual reality world based on the plurality of pairs of sampling information corresponding to a plurality of dimensional directions ⟩ 202

FIG. 2

Performing screening for the plurality of pairs of sampling information based on a first screening parameter, wherein the first screening parameter is a first projection error threshold value — 301

Aligning the plurality of pairs of sampling information based on a second time correction parameter — 302

Performing screening of sampling information for the plurality of pairs of sampling information based on a second screening parameter, wherein the second screening parameter is a second projection error threshold, and the first projection error threshold is greater than the second projection error threshold — 303

FIG. 3

Determining a plurality of candidate second time correction parameters in a second time correction parameter range, and adjusting a sampling time parameter of the two-dimensional detection data and a sampling time parameter of the three-dimensional detection data included in the plurality of pairs of sampling information respectively based on each of the candidate second time correction parameters — 401

Updating the sampling information based on at least two of the plurality of three-dimensional detection data corresponding to each of the candidate second time correction parameters — 402

Screening a second time correction parameter from the plurality of candidate second time correction parameters, the second time correction parameter is a candidate second time correction parameter with the largest number of inlier sampling information corresponding to the plurality of candidate second time correction parameters — 403

FIG. 4

Responding to a calibration starting operation, presenting operation prompt information, wherein the operation prompt information is used for guiding a target device to move along a plurality of dimensional directions

501

During a process of controlling the target device to move along the plurality of dimensional directions, sending a plurality of three-dimensional detection data of the target device corresponding to the plurality of dimensional directions

502

Responding to a sampling termination message, obtaining a calibration information of an image acquisition device in a coordinate system of a virtual reality world

503

FIG. 5

**600**

Acquisition module 601

Determining module 602

FIG. 6

**700**

Presentation
module 701

Sending module
702

Acquisition
module 703

FIG. 7

**800**

Processors
801

804

Memory
803

Communication
interface802

FIG. 8

**900**

Calculation unit
901

ROM 902

RAM 903

904

I/O Interface 905

Input unit 906

Output unit 907

Storage unit 908

Communication
unit 909

FIG. 9

## INTERNATIONAL SEARCH REPORT

| International application No. |
|---|
| **PCT/CN2023/133208** |

**A. CLASSIFICATION OF SUBJECT MATTER**

G06T 19/00(2011.01)i; G06F 3/01(2006.01)i

According to International Patent Classification (IPC) or to both national classification and IPC

**B. FIELDS SEARCHED**

Minimum documentation searched (classification system followed by classification symbols)

IPC: G06T G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 标定, 移动, 维度, 采样, 位姿, 二维, 三维, 时间, 对齐, 均匀, 混合现实, 虚拟现实, 投影, calibration, movement, dimension, sampling, pose, two-dimensional, three-dimensional, time, aligned, uniform, MRC, virtual reality, VR, project

**C. DOCUMENTS CONSIDERED TO BE RELEVANT**

| Category* | Citation of document, with indication, where appropriate, of the relevant passages | Relevant to claim No. |
|---|---|---|
| PX | CN 115937478 A (BEIJING ZITIAO NETWORK TECHNOLOGY CO., LTD.) 07 April 2023 (2023-04-07)<br>claims 1-14 | 1-14 |
| X | CN 115100276 A (BEIJING ZITIAO NETWORK TECHNOLOGY CO., LTD.) 23 September 2022 (2022-09-23)<br>description, paragraphs 132-313 | 1, 4-6, 10-14 |
| Y | CN 115100276 A (BEIJING ZITIAO NETWORK TECHNOLOGY CO., LTD.) 23 September 2022 (2022-09-23)<br>description, paragraphs 132-313 | 2-3, 7-9 |
| Y | CN 110717994 A (LENOVO (BEIJING) CO., LTD.) 21 January 2020 (2020-01-21)<br>description, paragraphs 85-131 | 2-3, 7-9 |
| Y | CN 113538591 A (SHENZHEN ORADAR TECHNOLOGY CO., LTD.) 22 October 2021 (2021-10-22)<br>description, paragraphs 67-107 | 2-3, 7-9 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 January 2024** | **25 January 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/133208** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 110378965 A (BEIJING BAIDU NETCOM SCIENCE AND TECHNOLOGY CO., LTD.) 25 October 2019 (2019-10-25) entire document | 1-14 |
| A | WO 2021249390 A1 (BEIKE TECHNOLOGY CO., LTD.) 16 December 2021 (2021-12-16) entire document | 1-14 |
| A | WO 2022241638 A1 (HUAWEI TECHNOLOGIES CO., LTD.) 24 November 2022 (2022-11-24) entire document | 1-14 |

Form PCT/ISA/210 (second sheet) (July 2022)

**INTERNATIONAL SEARCH REPORT**
**Information on patent family members**

International application No.

**PCT/CN2023/133208**

| Patent document cited in search report | | | Publication date (day/month/year) | Patent family member(s) | | | Publication date (day/month/year) |
|---|---|---|---|---|---|---|---|
| CN | 115937478 | A | 07 April 2023 | None | | | |
| CN | 115100276 | A | 23 September 2022 | None | | | |
| CN | 110717994 | A | 21 January 2020 | None | | | |
| CN | 113538591 | A | 22 October 2021 | WO | 2022262332 | A1 | 22 December 2022 |
| CN | 110378965 | A | 25 October 2019 | None | | | |
| WO | 2021249390 | A1 | 16 December 2021 | CN | 111681320 | A | 18 September 2020 |
| WO | 2022241638 | A1 | 24 November 2022 | CN | 114258319 | A | 29 March 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211678806